# EUROPEAN PATENT SPECIFICATION

(11) **EP 1 433 590 B1**
(45) Date of publication and mention of the grant of the patent: **09.05.2007**
(21) Application number: 03104895.2
(22) Date of filing: 22.12.2003
(51) Int. Cl.: B29D 30/20, B29D 30/32, B29D 30/36, B60C 9/04, B60C 9/08, B60C 9/18, B60C 15/00

(54) **Tire with composite ply structure and method of manufacture**
Luftreifen mit einer Karkassenverbundstruktur und Verfahren zu dessen Herstellung
Pneumatique à structure de nappe composite et son procédé de fabrication

(30) Priority: 27.12.2002 US 330890; 19.05.2003 US 442002
(43) Date of publication of application: 30.06.2004
(73) Proprietor: THE GOODYEAR TIRE & RUBBER COMPANY, Akron, Ohio 44316-0001 (US)
(72) Inventor: Losey, Robert Allen, Kent, Ohio 44240 (US)
(74) Representative: Kutsch, Bernd

(56) References cited:
- WO-A-98/52777
- FR-A- 1 425 801
- US-A- 3 451 461
- US-A- 4 150 703
- PATENT ABSTRACTS OF JAPAN vol. 1998, no. 11, 30 September 1998 (1998-09-30) & JP 10 157408 A (SUMITOMO RUBBER IND LTD), 16 June 1998 (1998-06-16)

## Description

This invention relates to tires having a composite ply structure including at least two split plies of inextensible radial extending cords, most preferably of steel cords primarily for use in pneumatic truck tires (including bus tires) having axially inner ply turnups, and a method of manufacturing such a tire.

### Background of the Invention

The use of radial steel cords in tires is well known in the tire art, earthmover and commercial truck tires have used steel corded tires for years.

Steel ply turnups have historically provided tire designers very difficult challenges and the use of axially outer steel cord ply turnups generally have required long turnups to insure the folded end stays in place during tire building and subsequent vulcanization. Axially outer ply turnups anchor or secure the radial ply to the bead cores and have been long considered a necessity.

The present invention provides a novel way of creating such a ply structure in a tire and another novel radial ply pneumatic tire made by this method.

JP-A-10-157 408 discloses a tire according to the preamble of claim 5. Some technical background to the invention is given in US-A- 4,150,703, WO-A-98/52777, FR-A- 1425801 and US-A- 3,45 ,461.

### Summary of the Invention

The present invention provides a method of building a tire utilizing an outside-in ply construction which torques the tire bead into the rim of the wheel to which it is mounted. The tire's outside-in ply construction also serves to pull down the toe of the tire, improving contact between the tire and the rim and to reduce rim indentation. The outside-in ply construction allows the rim to provide greater support for the tire. The increased rim support reduces toe lifting and facilitates the use of a smaller bead as compared to conventional truck tires. A smaller bead, combined with a smaller amount of rubber and reinforcement around and above the bead, reduces the tire's weight and material usage.

In more detail, the present invention provides a method of building a tire according to claim 1. The step of stitching the overlap of the sidewall plies to the crown ply is recommended.

Once toroidially shaped the method can further include applying a belt reinforcing structure to the toroidially shaped carcass, the first belt reinforcing layer having a width W_{B}, the first belt layer overlaps the radially outer ends of the sidewall plies. Then an additional one or more belt reinforcing layers can be applied to the carcass as well as the tread.

The present invention also relates to a tire according to claim 5.

Preferably, the tire further employs a tread having an arc length L_{T} extending between a pair of lateral tread edges. The overlapping of the sidewall plies relative to the crown ply occurs at a location axially inward of the lateral edges.

The sidewall ply cords are preferably steel or other highly inextensible material while the crown ply cords can also be substantially inextensible cords made of aramid or steel, these cords are preferably more extensible synthetic material such as nylon, polyester or rayon.

### Definitions

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Carcass" means the tire structure apart from the belt structure, tread, undertread, over the plies, but including the beads.

"Casing" means the carcass, belt structure, beads, sidewalls and all other components of the tire excepting the tread and undertread.

"Cord" means one of the reinforcement strands of which the plies in the tire are comprised.

"Equatorial Plane (EP)" means the plane perpendicular to the tire's axis of rotation and passing through the center of its tread.

"Ply" means a layer of rubber-coated parallel cords.

"Radial" and "radially" mean directions radially toward or away from the axis of rotation of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Tread Width or Tread Arc Width" means the arc length of the road-contacting tread surface in the axial direction, that is, in a plane parallel to the axis of rotation of the tire.

### Brief Description of the Drawings

The invention will be described by way of example and with reference to the accompanying drawings in which:
FIG. 1 is a cross-sectional view of the tire according to the invention;
FIG. 2 is an enlarged fragmentary view of one sidewall portion of the tire of Fig. 1;
FIG. 3 is a schematic view of the sidewall portion of the tire of Fig. 1;
FIG. 4 is a. perspective view of the ply shown on a building drum being fabricated employing a first method of assembly;
Fig.4A is a schematic cross-sectional view of the carcass components oriented to the preferred method;
Figs. 5A, 5B and 5C are schematic views of the tire carcass of Fig. 3 being made according to the method of the present invention;
Fig. 6 is a cross-sectional view of the general construction of a prior art tire;
Fig. 7 illustrates an expanded cross-sectional view of the bead region of the tire of Fig. 1;
Fig. 8 is a schematic diagram of the prior art tire of Fig. 6.

### Detailed Description of the Invention

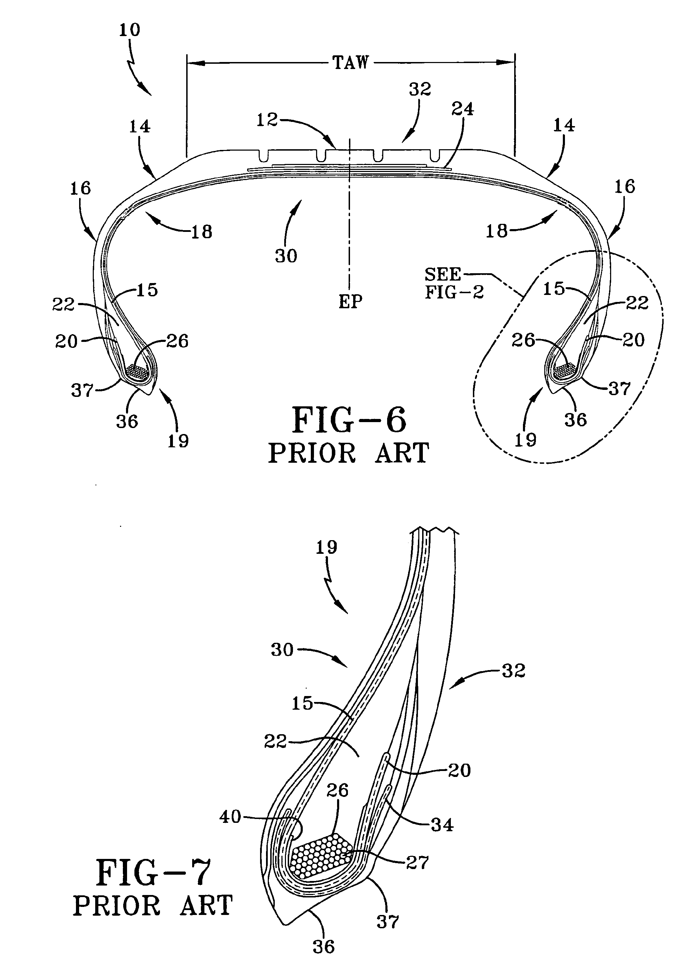

In the drawings the same numbers are used for the same components or items in the several views. With particular reference to Fig. 6, there is illustrated a cross-sectional view of the general construction of a prior art tire 100. The tire has a tread portion 12 and a pair of sidewalls 16 wherein the sidewalls are connected to the tread portion by shoulder regions 14. The tire may have one or more reinforcing belts 24. A carcass 18 of the tire includes one or more continuous radial plies 15, such as steel radial plies, extending from side to side. Bead regions 19 of the tire have a pair of axially spaced bead cores 26 around which are wrapped turn-up ends 20 of the radial plies 15. An apex 22 is sandwiched between the main body of the carcass 18 and the turn-up ends 20. Toes 36 and heels 37 provide a base for fitting the tire 100 to a wheel rim (not shown). Fig. 6 also illustrates the equatorial plane ("EP") and the tread arc width ("TAW") of the tire 100.

Fig. 7 illustrates an expanded cross-sectional view of the bead region 19 of a prior art tire. Each of the bead cores 26 has a substantially inextensible coil of round metal filaments 27. The wire gauge of the filaments may range from 1.27 to 2.032 mm (0.050 to 0.080 inches). Typical sizes are 2.032, 1.829, 1.6 and 1.27 mm (0.080, 0.072, 0.063 and 0.050 inch) diameter. The bead may be made by winding a single filament into an annular configuration or by using multiple individual filaments. The number of winds or filaments may vary, depending upon the size of the tire. A small truck tire may have as few as 20 filaments or winds, while larger truck tires may utilize as many as 65 winds or filaments. A flipper 40, such as a nylon fabric ply, is wrapped around the bead 26 to prevent the filaments 27 from cutting through the surrounding plies and rubber. The flipper 40 is surrounded by a turn-up end 20 of a radial ply 15. The radial ply 15 is routed generally parallel to the interior 30 of the tire, wraps around the bead 26, and terminates with a turn-up end 20 generally parallel to the exterior 32 of the tire. A chipper 34 may be wrapped around a portion of the turn-up end 20 to act as a stiffness transition gradient.

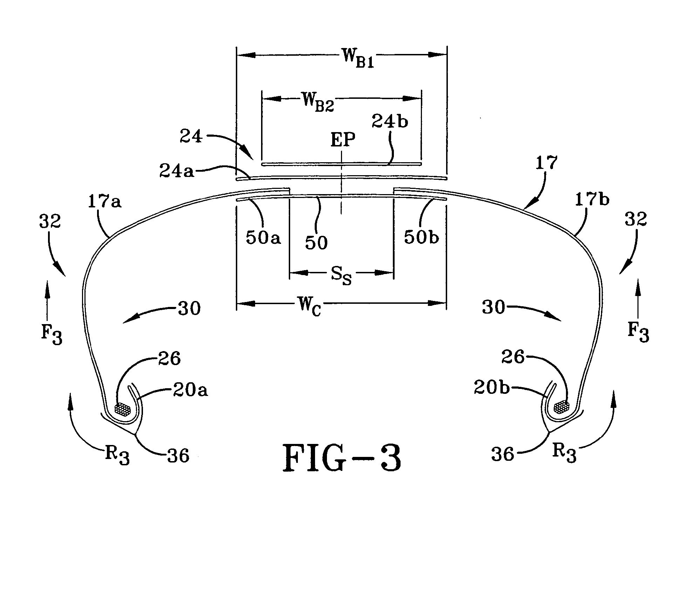

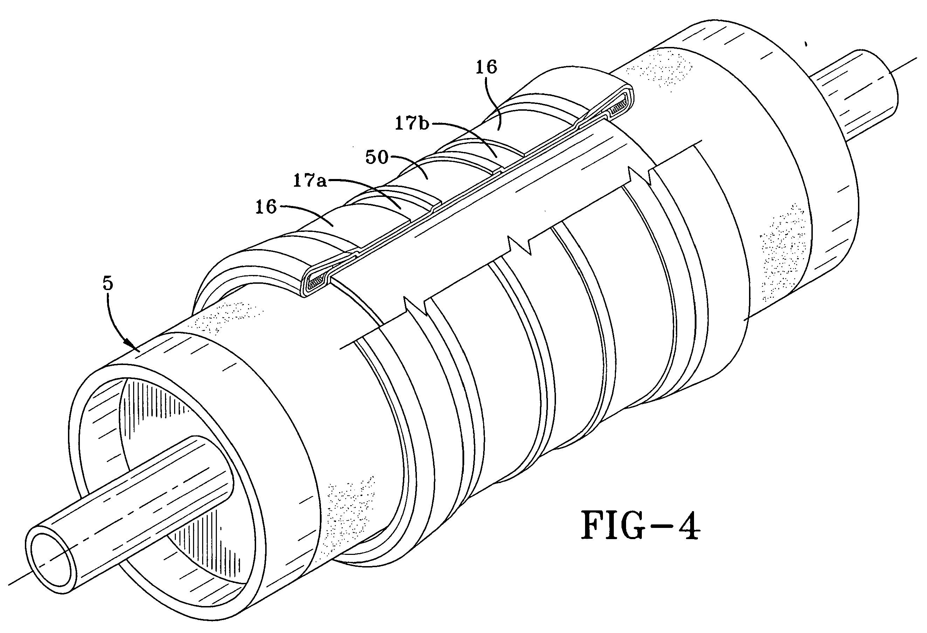

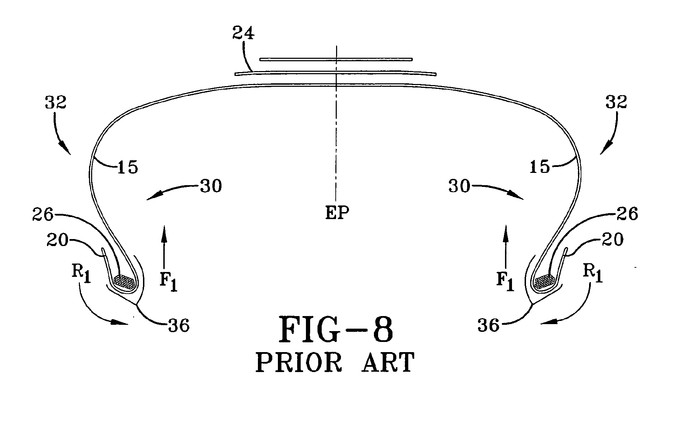

A schematic diagram of a prior art tire is illustrated in Fig. 8. The tire may have one or more reinforcing belts 24. As can be seen, the turn-up ends 20 wrap around the bead cores 26 in an inside-out fashion with reference to the interior 30 and exterior 32. Under the pressure of inflation, the radial ply 15 exerts an inherent upward force F₁ as seen in Fig. 3. The force F₁ exerted by the radial ply 15 causes the bead cores 26 to rotate in a direction R₁, causing the toe 36 to lift away from the rim (not shown). Over time this lifting creates a permanent set in the bead area making it difficult if not impossible to remount the tire if it is ever removed from the rim. Additionally under the pressure of inflation and the forces experienced during use, the ply in a conventional tire tends to move toward the rim and rubber adjacent the rim is displaced. This results in a noticeable rim indentation.

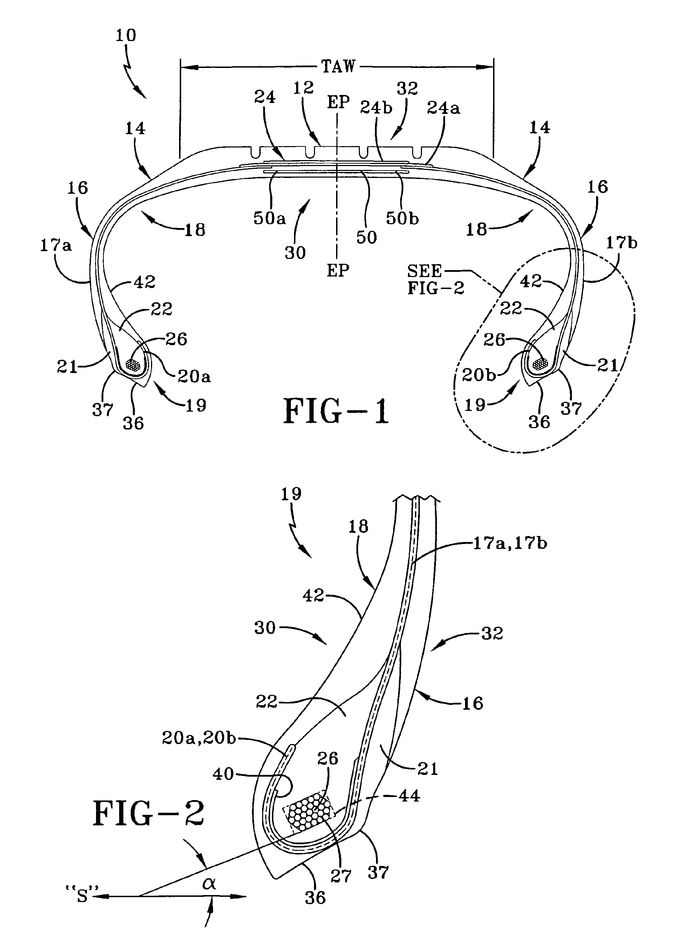

Fig. 1 shows a cross-sectional view of the general construction of a tire 10 according to a preferred embodiment of the present invention in which the cord-reinforced radial sidewall ply is split. By splitting the sidewall ply, tires including one or more down plies can be built on a conventional tire building machine. The tire 10 has a tread portion 12 and a pair of sidewalls 16 wherein the sidewalls 16 are connected to the tread portion 12 by shoulder regions 14. The tire 10 may have one or more reinforcing belts 24. A carcass 18 of the tire includes a radial ply reinforcing structure 17 with two separate "split" sidewall plies 17a and 17b. Bead regions 19 of the tire 10 have a pair of axially spaced bead cores 26 around which are wrapped turn-up ends 20a, 20b of the radial down sidewall plies 17a, 17b. An apex 22 is sandwiched between the main body of the carcass 18 and the turn-up ends 20a, 20b. Toes 36 and heels 37 provide a solid base to ensure a snug fit of the tire 10 to a wheel rim (not shown). Fig. 1 also illustrates the equatorial plane ("EP") and the tread arc width ("TAW") of the tire 10. A crown ply 50 used as shown and for tubeless tires an air impervious liner 42 may also be used. The liner 42 is made preferably of halobutyl rubber by way of example.

Fig. 2 shows an expanded cross-sectional view of the bead region 19 of the tire of Fig. 1. A bead 26 that is smaller than prior art bead cores is selected. The cross-sectional shape of the bead cores 26 is confined within a polygonal boundary extending from a flat base. The length is inclined at an angle α in the range of about 15 to 25 degrees relative to an axis "S" of rotation. A flipper ply 40, such as a nylon fabric ply, is wrapped around the bead 26 to prevent the filaments 27 from cutting through the surrounding plies and rubber. The radial down sidewall plies 17a and 17b are routed generally parallel to the exterior 32 of the tire. The radial down sidewall plies 17a and 17b wrap around the bead 26 and terminate in a turn-up end 20a, 20b oriented generally parallel to the interior 30 of the tire.

One measure of the tire's air cavity integrity is "burst strength" which is measured by pumping water into the tire until the weakest link in the reinforcing structure breaks. A burst strength of at least 26 bar and more typically at least 29 bar is desired in a truck tire. The following table provides an example of the bead core reduction that is feasible in accordance with certain embodiments of the invention. For tires having the tire size and number of wires shown in the following table, satisfactory burst strength can be achieved using an outside-in ply with bead cores having the number of wires or the cross-sectional area shown in Table 1:

**TABLE 1**

| Tire Size Invention | Conventional Winds (No.) | Conventional Bead Area (sq. in.) | Reduced Winds (No.) | Reduced Approx. Bead Area (sq. in.) |
|---|---|---|---|---|
| 315/80R22.5 | 57 | 0.23 | 29-33 | 0.12-0.13 |
| 295/75R22.5 | 36 | 0.15 | 19-24 | 0.08-0.10 |
| 11R22.5 | 36 | 0.15 | 19-24 | 0.08-0.10 |
| 11R22.5 | 51 | 0.21 | 27-29 | 0.11-0.12 |
| 255/70R22.5 | 34 | 0.14 | 18-24 | 0.07-0.10 |
| 285/75R24.5 | 36 | 0.15 | 18-24 | 0.07-0.10 |
| 11 R24.5 | 36 | 0.15 | 18-24 | 0.07-0.10 |
| 11 R24.5 | 51 | 0.21 | 27-29 | 0.11-.012 |
| 225/70R19.5 | 20 | 0.08 | 12-16 | 0.05-0.07 |
| 225/70R19.5 | 24 | 0.10 | 13-16 | 0.05-0.07 |
| 245/70R19.5 | 24 | 0.10 | 13-16 | 0.05-0.07 |

A schematic diagram of the embodiment of a tire shown in Fig. 1 in accordance with the invention is illustrated in Fig. 3. The tire may have one or more belts 24. The turn-up ends 20a, 20b of the radial outside-in down sidewall plies 17a, 17b wrap around the bead cores 26 in an outside-in fashion with reference to the exterior 32 and the interior 30. In this embodiment the tire 10 includes an additional crown ply 50 that is located below the belts 24 and spans the gap between the split sidewall plies 17a and 17b. Locating the turn-up ends 20a, 20b in this manner results in an inherent upward force F₃ on the bead cores 26. The bead cores 26 rotate in a direction R₃ (opposite of R₁ present in the prior art) in response to the force F₃, causing the toe 36 to press against the rim (not shown). This action increases the burst strength capacity of the tire in comparison to the prior art.

As an example, the reduction in bead size and tire weight of a tire produced according to an embodiment of the present invention, designated C1, is compared to a prior art tire, designated "Control." The metrics are illustrated in Table 2.

**TABLE 2**

| | Units | Control | C1 |
|---|---|---|---|
| Number of Bead Wires | Filament Gauge (0.072 inch) | 57 | 29 |
| Weight | Kilograms | 68.5 | 60.6 |

Fig. 2 shows an expanded cross-sectional view of the bead region 19 of the tire of Fig. 1. A bead 26 that is smaller than conventionally used for the size tire is selected. The cross-sectional shape of the bead cores 26 can vary, e.g., the bead may be triangular, rectangular, hexagonal or other shape. In this embodiment it is defined by a polygonal boundary extending from a flat base. A rectangular boundary may be defined by four dashed lines forming a rectangle 44, wherein one dashed line is tangent to the flat base and the remaining three lines are touching at least a point of the peripheral surface of the bead core, the rectangle having a height less than or equal to the length. The length is inclined at an angle α in the range of about 15 to 25 degrees relative to an axis "S" of rotation. The bead 26 typically may be made smaller by reducing the number of filaments 27 but this effect might also be achieved by reducing the wire gauge of the filaments 27. The gauge of the filaments 27 usually range from about 1.27 to 2.032 mm (0.050 inches to 0.080 inches) but any gauge taught for use in truck tires may be used. The number of filaments 27 in a bead core 26 will vary, depending upon the size of the tire. For example, with an outside-in ply a small truck tire (e.g., 15 inch) may utilize as few as 12 filaments, while larger truck tires (e.g., 24.5 inch) may utilize as few as 45 filaments in one embodiment depending on the size of the tire. More particularly, the number of filaments used may vary from about 15 to 40 filaments. Alternatively, a single filament wound into an annulus having a smaller cross sectional area may be used. In any case, the bead size cross-sectional area reduction from that of prior art truck tires may range from about 25% (and in some cases 30% or 40%) reduction for smaller tires and up to about 60% reduction for larger tires. For example, conventional truck tire beads typically have a transverse cross-sectional area of about 38.71 - 174.19mm² (0.06-0.27 sq. in), (15 to 65 wires at 1.829 mm (0.072 inch) diameter). In accordance with certain embodiments of the invention, this cross-sectional area can be reduced to about 32,26 to 116.13 mm² (0.05 to 0.18 sq. in), (12 to 45 wires at 1.829 mm (0.072 inch) diameter). Concomitantly, the weight of the tire can be reduced as much as about 5-7% in small tires to as much as about 10% or more in larger tires.

A flipper ply 40, such as a nylon fabric ply, is wrapped around the bead 26 to prevent the filaments 27 from cutting through the surrounding plies and rubber.

The use of turndown plies is avoided because it has often required the carcass to be fabricated in a manufacturing process that was unreliable or simply too costly to permit feasible production efficiency.

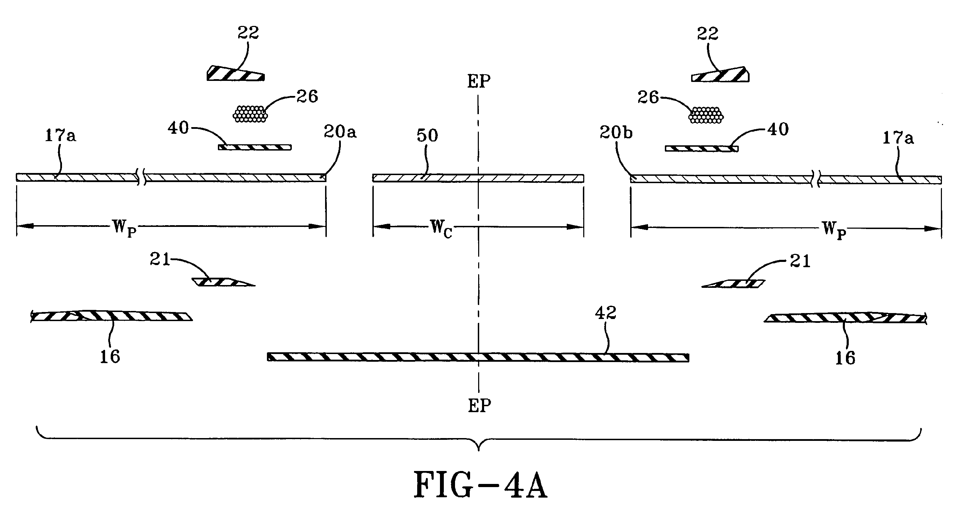

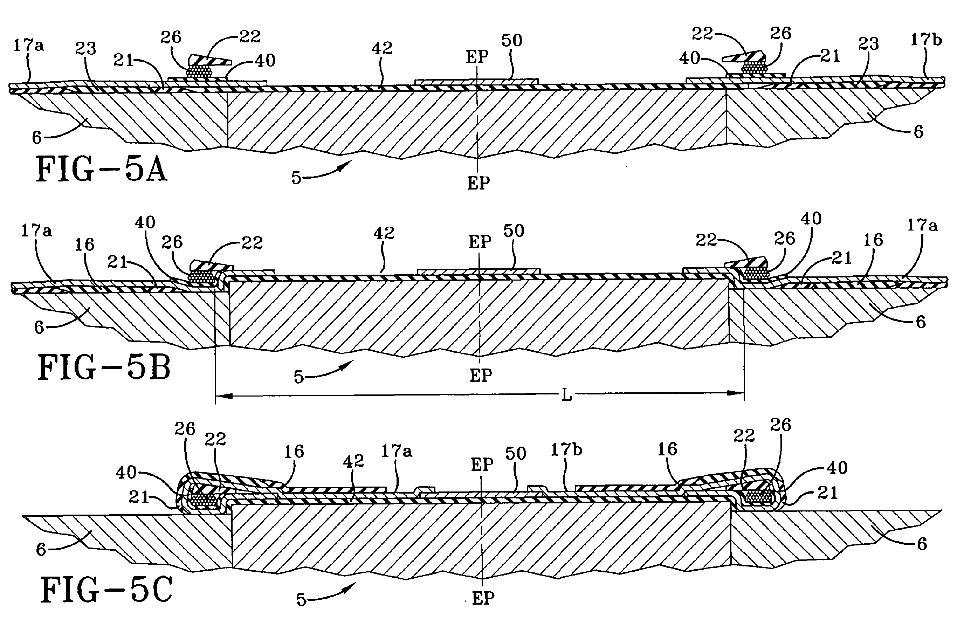

The method of manufacturing the present invention permits the tire to be fabricated on a flat build cylindrically shaped building drum 5 as illustrated in Figures 4, 4A and 5A, 5B, and 5C.

Tires 10 are generally formed as a laminated structure of elastomeric strips, some of which are cord reinforced, some of which are unreinforced such as liners, gum strips, apex, chafers, sidewalls and tread rubber. Chippers, flippers, radial plies and belt layers have cords reinforcing the rubber compositions.

As shown in Figure 4A, an option liner layer 42 may first be applied to the building drum 5. A crown ply 50 preferably reinforced with steel cords or a synthetic textile cord of polyester, nylon or rayon is applied to the building drum 5 and centrally positioned in the centerline as shown. A pair of sidewall ply layers 17a, 17b are applied onto the building drum with the axially inner turnup ends 20a, 20b being spatially separated from the crown ply 50. As shown the crown ply 50 may be placed before or after the pair of sidewall plies 17a, 17b.

An optional pair of flipper strips 40 can be located in an area approximated at the location of the bead cores 26 if so desired.

The bead cores 26 are then passed over the building drum 5 over the cylindrically formed components and placed on the drum 5 at a predetermined spacing L between the bead cores. Preferably the bead cores are locked into position on the building drum.

At each end of the building drum 5 is a means 6 for turning up and folding over the sidewall plies 17a, 17b. When the means 6 is activated the sidewall plies 17a, 17b are folded overlapping lateral edge portions 50a and 50b of the crown ply 50 on each side. The assembly can then be stitched securing the carcass assembly 18.

A pair of rubber sidewall strips 16 can be applied preferably overlying the sidewall plies 17a, 17b below the overlap with the crown ply 50.

The carcass assembly 18 may have had a pair of chafer strips 21 applied in an area directly below the beads as an initially applied component.

Once all the carcass components are assembled, the carcass assembly 18 can be toroidially shaped by moving the beads 26 and carcass components axially inwardly as the assembly is expanded radially to a toroidal shape. This shaping folds the turnup ends 20a, 20b radially outwardly along the axially inner portion of the beads 19 adjacent the flipper 40 and apex 22 as shown in Fig. 2..

A first belt layer 24a is then applied to the carcass covering the crown ply 50 and the overlapping portions of the sidewall plies 17a, 17b. This overlapping belt layer 24a provides additional structure to hold the assembly together. The first belt layer 24a has a width W_{B1}, as shown. A second narrower in width belt layer 24b having cords inclined opposite the first layer 24a can then be applied. That second belt layer has a width W_{B2}

If the first belt layer has cords oriented at about 0° then a second and third belt layers 24b and 24c may be employed as an alternative construction.

The resultant method yields a tire as illustrated in Figures 1 through 3. As shown in Figure 3 the ends of plies 17a and 17b are sandwiched between the crown ply 50 having a width W_{C} and the first belt layer 24a. As illustrated the first belt layer has a width W_{B1} at least equal to the crown ply 50 width W_{C}. The ends of the plies 17a and 17b are gapped spaced a distance S_{S} wherein S_{S} is narrower than the second belt layer W_{B2} as shown.

This construction creates a very strong mechanical structure in the crown area of the tire and insures the ends of plies 17a and 17b are moved well inboard of the highly flexed tread shoulders 14 and directly inward of the crown portion of the tread 13 and belt reinforcing structure 29.

## Claims

1. A method of building a tire (10) having a carcass assembly (18) having a pair of bead cores (26) and a radial ply reinforcing structure (17) ; the method comprising the steps of:
cylindrically applying a pair of radial cord reinforced sidewall plies (17a, 17b), each sidewall ply (17a, 17b) having a width W_{P};
setting one bead core (26) over each sidewall ply (17a, 17b) and fixing the axial spacing between the bead cores (26) at a distance L;
applying a crown ply (50) having a width W_{C}, W_{C} being less than the distance L and the crown ply (50) being interposed between and spaced from each sidewall ply (17a, 17b);
turning up each sidewall ply (17a, 17b) to overlap lateral edges (50a, 50b) of the crown ply (50);
moving the carcass assembly (18) axially inwardly while shaping the carcass assembly (18) toroidially to form ply turnups (20a, 20b) axially inwardly of the bead cores (26).

2. The method of claim 1, further comprising the steps of:
applying a first belt reinforcing layer (24a) to the toroidially shaped carcass (18), the first belt reinforcing layer (24a) having a width W_{B1}, the first belt reinforcing layer (18) overlaps the radially outer ends of the sidewall plies (17a, 17b).

3. The method of claim 1 or 2, further including the steps of:
stitching the overlap of the sidewall plies (17a, 17b) to the crown ply (50).

4. The method of at least one of the previous claims, further comprising the steps of:
applying one or more additional belt reinforcing layers (24b, 24c) to the carcass (18) and first reinforcing layer (24a);
applying a tread (12).

5. A pneumatic radial ply tread tire (10) comprising:
a pair of axially-spaced bead cores (26);
a carcass (18) having a pair of sidewall plies (17a, 17b), each sidewall ply (17a, 17b) being reinforced with parallel radially extending cords, the sidewall plies (17a, 17b) extending axially outward along a sidewall (16) and, extending radially inwardly to the bead core (26) and being folded from a position axially outside the bead cores (26) to a position axially inside and around the bead cores (26) to an axially inner turnup end (20a, 20b);
a belt reinforcing structure having at least two cord reinforced belt layers (24a, 24b), a first radially inner belt layer (24a) and a second radially outer adjacent layer (24b), the first radially inner belt layer (24a) overlapping a radially outer portion of the sidewall plies (17a, 17b); and a tread (12); **characterized in that** the carcass (18) has a crown ply (50) being reinforced with parallel radially extending cords; that the sidewall plies (17a, 17b) overlap the crown ply (50); and that the first radially inner belt layer (24a) overlaps the crown ply (50).

6. The pneumatic radial ply tire of claim 5, wherein the tire (10) has a tread arc length L extending between a pair of lateral tread edges, the overlapping of the sidewall plies (17a, 17b) relative to the crown ply (50) occurs at a location axially inward of the lateral edges.

7. The pneumatic radial ply tire of claim 5 or 6, wherein the sidewall plies (17a, 17b) are reinforced with steel cords and/or wherein the crown ply (50) is reinforced with substantially inextensible cords made of steel or aramid or with more extensible synthetic material such as nylon, polyester or rayon.

8. The pneumatic radial ply tire of claim 5, wherein the radially outer ends of the sidewall plies (17a, 17b) are gap spaced a distance S_{S}, wherein S is narrower than the width (W_{B2}) of the second belt layer (24b).

9. The pneumatic radial ply tire of claim 5, wherein the tire is a truck tire.

## Patentansprüche

1. Verfahren zum Bauen eines Reifens (10) mit einer Karkassenbaugruppe (18) mit einem Paar Wulstkernen (26) und einer radialen Lagenverstärkungsstruktur (17) ; wobei das Verfahren die Schritte umfasst des :
zylindrischen Anbringens eines Paars radialer kordverstärkter Seitenwandlagen (17a, 17b), wobei jede Seitenwandlage (17a, 17b) eine Breite W_{P} hat ;
Setzens eines Wulstkerns (26) über jede Seitenwandlage (17a, 17b) und Festsetzens des axialen Zwischenraums zwischen den Wulstkernen (26) in einem Abstand L ;
Anbringens einer Zenitlage (50) mit einer Breite W_{C}, wobei W_{C} kleiner ist als der Abstand L und die Zenitlage (50) zwischen die Seitenlagen (17a, 17b) dazwischengesetzt und von jeder davon beabstandet ist ;
nach oben Umschlagens jeder Seitenwandlage (17a, 17b), um laterale Kanten (50a, 50b) der Zenitlage (50) zu überlappen ;
axial einwärts Bewegens der Karkassenbaugruppe (18) während des zu einer Kreisringform Formens der Karkassenbaugruppe (18), um Lagenumschläge (20a, 20b) axial einwärts von den Wulstkernen (26) zu bilden.

2. Verfahren von Anspruch 1, weiter die Schritte umfassend des :
Anbringens einer ersten Gürtelverstärkungslage (24a) an der kreisringförmig geformten Karkasse (18), wobei die erste Gürtelverstärkungslage (24a) eine Breite W_{B1} hat, wobei die erste Gürtelverstärkungslage (18) die radial äußeren Enden der Seitenwandlagen (17a, 17b) überlappt.

3. Verfahren von Anspruch 1 oder 2, weiter die Schritte umfassend des :
Anrollens der Überlappung der Seitenwandlagen (17a, 17b) an die Zenitlage (50).

4. Verfahren von mindestens einem der vorhergehenden Ansprüche, weiter die Schritte umfassend des :
Anbringens einer oder mehrerer zusätzlicher Gürtelverstärkungslagen (24b, 24c) an der Karkasse (18) und ersten Verstärkungslage (24a) ;
Anbringens einer Lauffläche (12).

5. Luftreifen (10) mit Radiallagenlauffläche, umfassend:
ein Paar axial beabstandeter Wulstkerne (26) ;
eine Karkasse (18) mit einem Paar Seitenwandlagen (17a, 17b), wobei jede Seitenwandlage (17a, 17b) mit parallelen, radial verlaufenden Korden verstärkt ist, wobei die Seitenwandlagen (17a, 17b) axial auswärts entlang einer Seitenwand (16) verlaufen und radial einwärts zu dem Wulstkern (26) verlaufen und von einer Position axial außerhalb der Wulstkerne (26) zu einer Position axial innerhalb der Wulstkerne (26) und um diese herum zu einem axial inneren Umschlagende (20a, 20b) herumgeschlagen sind ;
eine Gürtelverstärkungsstruktur mit mindestens zwei kordverstärkten Gürtellagen (24a, 24b), einer ersten radial inneren Gürtellage (24a) und einer zweiten radial äußeren benachbarten Lage (24b), wobei die erste radial innere Gürtellage (24a) einen radial äußeren Teil der Seitenwandlagen (17a, 17b) überlappt ; und eine Lauffläche (12) ; **dadurch gekennzeichnet, dass** die Karkasse (18) eine Zenitlage (50) aufweist, die mit parallelen, radial verlaufenden Korden verstärkt ist ; dass die Seitenwandlagen (17a, 17b) die Zenitlage (50) überlappen ; und dass die erste radial innere Gürtellage (24a) die Zenitlage (50) überlappt.

6. Radiallagen-Luftreifen von Anspruch 5, wobei der Reifen (10) eine Laufflächenkonturlänge L hat, die zwischen einem Paar lateraler Laufflächenkanten verläuft, wobei die Überlappung der Seitenwandlagen (17a, 17b) relativ zur Zenitlage (50) an einer Stelle axial einwärts von den lateralen Kanten erfolgt.

7. Radiallagen-Luftreifen von Anspruch 5 oder 6, wobei die Seitenwandlagen (17a, 17b) mit Stahlkorden verstärkt sind und/oder wobei die Zenitlage (50) mit im Wesentlichen unausdehnbaren Korden, die aus Stahl oder Aramid hergestellt sind, oder mit dehnbarerem synthetischem Material, wie etwa Nylon, Polyester oder Rayon, verstärkt ist.

8. Radiallagen-Luftreifen von Anspruch 5, wobei die radial äußeren Enden der Seitenwandlagen (17a, 17b) um einen Abstand S_{S} berührungslos beabstandet sind, wobei S_{S} schmaler ist als die Breite (W_{B2}) der zweiten Gürtellage (24b).

9. Radiallagen-Luftreifen von Anspruch 5, wobei der Reifen ein Lastkraftwagenreifen ist.

## Revendications

1. Procédé de confection d'un bandage pneumatique (10) possédant un assemblage de carcasse (18) possédant une paire de tringles de talons (26) et une structure de renforcement de nappe radiale (17), le procédé comprenant les étapes consistant à :
appliquer, en position cylindrique, une paire de nappes de flancs radiales renforcées avec des câblés (17a, 17b), chaque nappe de flanc (17a, 17b) possédant une largeur W_{P} ;
placer une tringle de talon (26) par-dessus chaque nappe de flanc (17a, 17b) et fixer l'écartement axial entre les tringles de talons (26) à une distance L ;
appliquer une nappe de sommet (50) possédant une largeur W_{C}, W_{C} étant inférieure à la distance L et la nappe de sommet (50) étant intercalée entre chaque nappe de flanc (17a, 17b), tout en étant espacée desdites nappes ;
retourner vers le haut chaque nappe de flanc (17a, 17b) afin de recouvrir les bords latéraux (50a, 50b) de la nappe de sommet (50) ;
déplacer l'assemblage de carcasse (18) en direction axiale vers l'intérieur tout en conférant une forme toroïdale à l'assemblage de carcasse (18) pour obtenir des relèvements de nappes (20a, 20b) en direction axiale à l'intérieur des tringles de talons (26).

2. Procédé selon la revendication 1, comprenant en outre l'étape consistant à :
appliquer une première couche de renforcement de ceinture (24a) sur la carcasse (18) de configuration toroïdale, la première couche de renforcement de ceinture (24a) possédant une largeur W_{B1}, la première couche de renforcement de ceinture (18) recouvrant les extrémités externes en direction radiale des nappes de flancs (17a, 17b).

3. Procédé selon la revendication 1 ou 2, englobant en outre l'étape consistant à :
piquer le recouvrement des nappes de flancs (17a, 17b) à la nappe de sommet (50).

4. Procédé selon l'une quelconque des revendications précédentes, englobant en outre l'étape consistant à :
appliquer une ou plusieurs couches de renforcement de ceinture supplémentaires (24a, 24b) sur la carcasse (18) et sur la première couche de renforcement (24a) ;
appliquer une bande de roulement (12).

5. Bandage pneumatique à nappe radiale (10) possédant une bande de roulement, comprenant :
une paire de tringles de talons (26) espacées en direction axiale ;
une carcasse (18) possédant une paire de nappes de flancs (17a, 17b), chaque nappe de flanc (17a, 17b) étant renforcée avec des câblés s'étendant en parallèle en direction radiale, les nappes de flancs (17a, 17b) s'étendant en direction axiale vers l'extérieur le long d'un flanc (16), s'étendant en direction radiale à l'intérieur de la tringle de talons (26) et étant repliées à partir d'une position située à l'extérieur des tringles de talons (26) en direction axiale jusqu'à une position située à l'intérieur en direction axiale et autour des tringles de talons (26) jusqu'à une extrémité retournée vers le haut, interne en direction axiale (20a, 20b) ;
une structure de renforcement de ceinture possédant au moins deux couches de ceinture (24a, 24b) renforcées avec des câblés, une première couche de ceinture (24a) interne en direction radiale et une deuxième couche adjacente (24b) externe en direction radiale, la première couche de ceinture (24a) interne en direction radiale recouvrant une portion externe des nappes de flancs (17a, 17b) ; et une bande de roulement (12) ; **caractérisé en ce que** la carcasse (18) possède une nappe de sommet (50) renforcée avec des câblés s'étendant en parallèle en direction radiale ; **en ce que** les nappes de flancs (17a, 17b) recouvrent la nappe de sommet (50) ; et **en ce que** la première couche de ceinture (24) interne en direction radiale recouvre la nappe de sommet (50).

6. Bandage pneumatique à nappe radiale selon la revendication 5, dans lequel le bandage pneumatique (10) possède une longueur d'arc de bande de roulement L s'étendant entre une paire de bords latéraux de bande de roulement, le recouvrement des nappes de flancs (17a, 17b) par rapport à la nappe de sommet (50) ayant lieu à un endroit situé à l'intérieur des bords latéraux en direction axiale.

7. Bandage pneumatique à nappe radiale selon la revendication 5 ou 6, dans lequel les nappes de flancs (17a, 17b) sont renforcées avec des câblés en acier et/ou dans lequel la nappe de sommet (50) est renforcée avec des câblés essentiellement inextensibles constitués d'acier ou d'aramide ou avec une matière synthétique plus extensible telle que du nylon, du polyester ou de la rayonne.

8. Bandage pneumatique à nappe radiale selon la revendication 5, dans lequel les extrémités externes en direction radiale indène de flancs (17a, 17b) sont espacées sur une distance S_{S}, S_{S} étant plus étroite que la largeur (W_{B2}) de la deuxième couche de ceinture (24b) .

9. Bandage pneumatique à nappe radiale selon la revendication 5, dans laquelle le bandage pneumatique est un bandage pneumatique pour camion.
